Europäisches Patentamt

(19) European Patent Office

Office européen des brevets

(11) Numéro de publication: **0 063 531**
**B1**

(12) **FASCICULE DE BREVET EUROPEEN**

(45) Date de publication du fascicule du brevet:
31.07.85

(21) Numéro de dépôt: **82440012.1**

(22) Date de dépôt: **21.04.82**

(51) Int. Cl.⁴: **A 01 B 71/00,** A 01 D 69/00,
F 16 H 1/20, B 60 K 25/06

(54) Machine agricole à dispositif de transmission de mouvement perfectionné.

(30) Priorité: **22.04.81 FR 8108156**

(43) Date de publication de la demande:
**27.10.82 Bulletin 82/43**

(45) Mention de la délivrance du brevet:
**31.07.85 Bulletin 85/31**

(73) Titulaire: **KUHN S.A., 4, Impasse des Fabriques,**
**F-67700 Saverne (FR)**

(72) Inventeur: **Gantzer, Jean-Paul, 128, Grand'Rue**
**Dannelbourg, F-57820 Lutzelbourg (FR)**

(84) Etats contractants désignés:
**DE GB NL**

(56) Documents cités:
**DE - A - 1 655 950**
**DE - B - 1 068 049**
**FR - A - 1 485 391**
**FR - A - 2 019 752**
**FR - A - 2 092 953**
**FR - A - 2 312 184**
**FR - A - 2 399 201**
**US - A - 3 001 409**

# Description

La présente invention concerne les machines agricoles dont les outils sont mis en mouvement à partir de la prise de force d'un tracteur.

Les vitesses de rotation des arbres de prise de force des tracteurs agricoles répondent à des normes et sont actuellement au nombre de deux: 540 et 1000 tr/min. De nombreux tracteurs actuellement en service sont équipés de prise de force tournant soit à l'une, soit à l'autre de ces deux vitesses. Depuis quelques années déjà, les constructeurs proposent également un certain nombre de modèles possédant les deux régimes de rotation, le mécanisme de sélection de l'un ou de l'autre desdits régimes variant suivant les différents constructeurs.

En sus, l'arbre de prise de force possède une forme différente selon qu'il doit tourner à 540 ou à 1000 tr/min. Les deux formes les plus répandues pour les tracteurs de basse et moyenne puissance sont:

— arbre cannelé de diamètre 35 millimètres (1$^3$/$_8$ de pouce) à 6 cannelures droites pour les prices de force tournant à 540 tr/min,
— arbre cannelé de diamètre 35 millimètres (1$^3$/$_8$ de pouce) à 21 cannelures en développante pour les prises de force tournant à 1000 tr/min.

Il semble alors difficile au constructeur de machines agricoles adaptables auxdits tracteurs et devant être entraînées par la prise de force de ceux-ci, de proposer pour chaque type de machines, un modèle de base sans toute une série d'accessoires permettant les différentes adaptations possibles.

En effet, lesdites machines doivent en général tourner à une vitesse bien déterminée avec une plage de tolérance autour de cette vitesse assez réduite, de telle sorte que celles-ci doivent être obligatoirement entraînées à 540 ou à 1000 tr/min suivant que leur transmission interne a été déterminée pour l'une ou l'autre de ces deux vitesses.

Il incombe donc au concessionnaire d'adapter chaque machine qu'il vend au tracteur que possède l'acheteur. Pour ce faire, il doit monter sur la machine, le carter correspondant à la vitesse de rotation de la prise de force du tracteur et modifier l'arbre de transmission pour que l'extrémité qui se situe du côté du tracteur possède la forme complémentaire de celle de l'arbre de prise de force.

On comprend donc aisément qu'il est impossible au constructeur, lors du lancement d'une série de machines, de connaître le nombre de carters et d'arbres de transmission à prévoir pour l'une ou l'autre des vitesses, de telle manière qu'en pratique chaque machine devra être expédiée avec les différents carters et arbres de transmission.

Ceci crée également des contraintes au concessionnaire qui est obligé de tenir les différents types de carters et d'arbres de transmission en stock.

Ceci crée enfin des contraintes à l'utilisateur qui, s'il possède deux tracteurs, l'un avec une prise de force tournant à 540 tr/min, l'autre avec une prise de force tournant à 1000 tr/min, ne pourra atteler la machine qu'à l'un ou à l'autre desdits tracteurs selon qu'elle a été adaptée pour être entraînée avec celui à 540 ou celui à 1000 tr/min. Il s'ensuit donc que, si le tracteur auquel la machine a été adaptée, est occupé pour un autre travail, ladite machine ne pourra pas être attelée au deuxième tracteur. Ceci est ennuyeux surtout en période de récolte où il faut profiter au mieux des conditions de maturité des produits et des conditions météorologiques optimales.

On peut alors imaginer un carter qui permet les deux vitesses, de telle manière qu'il est possible de sélectionner la vitesse suivant l'un ou l'autre des types de tracteurs. Ce principe, bien que beaucoup plus souple que celui décrit ci-dessus, présente cependant toujours l'inconvénient d'avoir à prévoir deux arbres de transmission à joints de Cardan afin de pouvoir faire l'adaptation sur l'une ou l'autre des formes des arbres de prise de force. Ce même inconvénient persiste avec les tracteurs sur lesquels on peut sélectionner soit 540, soit 1000 tr/min.

De plus, un tel carter présente l'inconvénient d'être relativement cher, vu le nombre d'engrenages et le mécanisme de s'élection qu'il renferme.

Dans le brevet américain N° 3 001 409 est décrit un boîtier adaptable sur l'arbre de prise de force et qui se fixe sur le tracteur à l'aide de vis. Ce boîtier peut être aménagé de telle manière qu'il puisse se brancher sur un arbre de prise de force à 6 cannelures et tournant à 540 tr/min ou sur un arbre de prise de force à 21 cannelures et tournant à 1000 tr/min. Dans le premier cas, ledit boîtier comporte un arbre de sortie à 21 cannelures et tournant à 1000 tr/min et dans le deuxième cas, un arbre de sortie à 6 cannelures et tournant à 540 tr/min.

Ce boîtier, bien que supprimant les problèmes de fabrication chez le constructeur de machines agricoles et les problèmes de stockage des accessoires d'adaptation chez le concessionnaire desdites machines, ne résout pas de manière facile les problèmes d'adaptation que rencontre l'utilisateur.

Si l'on se replace dans l'hypothèse évoquée ci-dessus dans laquelle l'utilisateur possède deux tracteurs dont les prises de force tournent respectivement à 540 tr/min pour l'un et 1000 tr/min pour l'autre, on voit que l'utilisateur doit aménager ledit boîtier tantôt pour 540, tantôt pour 1000 tr/min ou posséder deux boîtiers différents.

En effet, il peut arriver que deux machines conçues pour être entraînées à 540 tr/min par exemple, doivent travailler simultanément. L'utilisateur devra donc monter sur le tracteur dont la prise de force tourne à 1000 tr/min, un boîtier qui convertisse cette vitesse à 540 tr/min avec l'arbre de sortie correspondant à cette vitesse. Si peu de temps après ce sont deux machines conçues pour être entraînées à 1000 tr/min qui doivent travailler simultanément, l'utilisateur devra enlever le boîtier qui est monté sur le tracteur à 1000 tr/min et l'aménager pour qu'il puisse s'adapter sur le tracteur à 540 tr/min.

Dans tous les cas, même si l'utilisateur possède deux boîtiers, il devra enlever un des boîtiers de l'un des tracteurs et monter l'autre boîtier sur le deuxième tracteur. Ces opérations nécessitent un minimum d'outillage et représentent une perte de temps.

Il existe également des tracteurs de haute puissance dont la prise de force tourne à une vitesse et 1000 tr/min. Les formes des arbres desdites prises de force sont normalisées et sont actuellement:

— arbre cannelé de diamètre 45 millimètres ($1^3/_4$ de pouce) à 6 cannelures droites,
— arbre cannelé de diamètre 45 millimètres ($1^3/_4$ de pouce) à 20 cannelures en développante.

Il existe pour les machines agricoles devant être entraînées par de tels tracteurs, des problèmes d'adaptation à la forme des arbres de prise de force similaires à ceux décrits précédemment.

Dans la demand de brevet FR-A-2 399 201 est décrit un carter à deux arbres d'entrée qui doit permettre, à partir d'une même vitesse de rotation de la prise de force du tracteur, d'entraîner la machine agricole à des vitesses différenets pour le hachage de récoltes de genres différents. Il s'agit donc d'un carter qui permet d'entraîner la machine agricole à des vitesses différentes à partir d'une même vitesse de rotation de la prise de force du tracteur. Pour ce faire, les arbres d'entrée sont chacun munis d'une roue dentée dont les diamètres sont différents et qui engrènent avec une roue commune calée sur l'arbre des outils de hachage. En branchant la même extrémité d'un arbre de transmission à joints de Cardan sur l'un ou l'autre des arbres d'entrée, on peut modifier la vitesse desdits outils de hachage. Ce carter ne permet cependant pas de faciliter l'adaptation de machines aux différentes formes de prise de force de tracteurs.

Pour supprimer l'ensemble de ces inconvénients, la machine agricole selon l'invention comporte un dispositif de transmission de mouvement qui se compose d'une manière connue en soi d'un carter comportant deux arbres d'entrée reliés aux outils de la machine par des moyens d'entraînement et entraînés par la prise de force du tracteur au moyen d'un arbre de transmission à joints de Cardan, que les profils des cannelures des arbres d'entrée sont différents, et que l'une des fourches d'extrémité de l'arbre de transmission à joints de Cardan possède un alésage dont les cannelures sont identiques à celles du premier arbre d'entrée et dont l'autre fourche d'extrémité possède un alésage dont les cannelures sont identiques à celles du deuxième arbre d'entrée.

Ainsi une machine agricole selon l'invention peut être attelée à n'importe quel tracteur en ne nécessitant aucune adaptation spéciale.

En effet, pour les tracteurs de basse et moyenne puissance, le premier arbre d'entrée dudit carter qui correspond par exemple à 1000 tr/min, est avantageusement pourvu de 6 cannelures tandis que le deuxième arbre d'entrée correspondant par exemple à 540 tr/min est lui pourvu de 21 cannelures.

Ce carter, en combinaison avec l'arbre de transmission à joints de Cardan dont l'une des fourches d'extrémité possède un alésage à 6 cannelures et l'autre fourche d'extrémité, un alésage à 21 cannelures, permet d'atteler la machine à n'importe quel tracteur.

En effet, si la machine doit être attelée à un tracteur possédant une prise de force à 1000 tr/min, on branchera l'extrémité de l'arbre de transmission possédant 21 cannelures sur l'arbre de prise de force du tracteur et l'autre extrémité dudit arbre de transmission qui possède 6 cannelures sur l'arbre d'entrée 1000 tr/min du carter qui possède également 6 cannelures.

Si maintenant la même machine doit être attelée à un tracteur possédant une prise de force à 540 tr/min, il suffit de retourner l'arbre de transmission de telle manière que l'extrémité dudit arbre possédant 6 cannelures puisse être branchée sur l'arbre de prise de force du tracteur, l'autre extrémité dudit arbre de transmission étant branchée sur l'arbre d'entrée 540 tr/min du carter qui possède 21 cannelures.

Pour les machines agricoles devant être entraînées par des tracteurs de haute puissance, l'adaptation se fera d'une manière similaire à celle qui vient d'être décrite.

Grâce au dispositif de transmission de mouvement décrit ci-dessus, les problèmes qui apparaissaient chez le constructeur lors du lancement d'une série de machines, les problèmes de stockage des accessoires d'adaptation chez le concessionnaire et les problèmes d'attelage chez l'utilisateur, lorsque celui-ci possède plusieurs tracteurs dont les prises de force tournent à des vitesses différentes et ayant des formes différentes ou dont les prises de force tournent à des mêmes vitesses mais ayant des formes différentes, sont résolus.

De plus, l'attelage d'une machine agricole selon l'invention, ne nécessite aucun outillage comme cela était le cas lors de l'adaptation du boîtier faisant l'objet du brevet américain évoqué plus haut.

Un autre avantage des machines agricoles selon l'invention est que tout risque d'erreur est supprimé lors du branchement de l'arbre de transmission à joints de Cardan.

D'autres caractéristiques et avantages de 'linvention apparaîtront ci-après dans la description nullement limitative d'un exemple de réalisation en référence aux dessins annexés sur lesquels:

— La figure 1 représente une vue frontale en perspective d'une machine agricole selon l'invention,
— la figure 2 représente une vue en coupe du carter de transmission de mouvement et de l'arbre de transmission reliant ce carter au tracteur, d'une machine agricole selon l'invention.

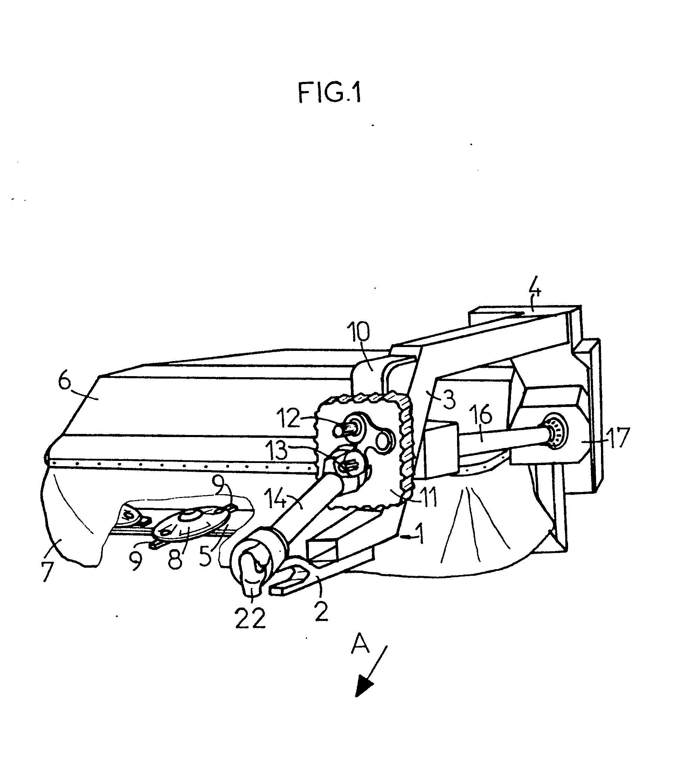

Sur la figure 1, on voit que la machine agricole selon l'invention est pour l'exemple une faucheuse-conditionneuse traînée.

Cette machine est attelée derrière un tracteur (non représenté) par l'intermédiaire du timon (1). Le timon (1) comporte à l'avant, vu dans le sens d'avancement de la machine défini par la flèche (A), une chape (2) qui est reliée à la barre à trous dudit tracteur (non représenté). La chape (2) est fixée à l'une des extrémités du bras de timon (3), l'autre extrémité dudit bras de timon (3) étant fixée au châssis (4) de la faucheuse.

La barre de coupe (5) et le système de conditionnement (non représenté) sont aménagés sous le capot (6) à la partie frontale duquel est fixée une toile de protection (7) qui freine les éventuels projectiles tels que pierres par exemple, lancés par les disques (8) pendant leur rotation.

Les disques (8) sont du type elliptique et possèdent à leur périphérie deux couteaux (9) montés de telle manière qu'ils puissent tourner librement autour de leur fixation pour pouvoir s'éclipser sous lesdits disques (8) lorsqu'ils interfèrent avec un obstacle. Les couteaux (9) sont maintenus automatiquement dans leur position de travail sous l'action de la force centrifuge.

A l'avant du bras de timon (3) est soudé un support (10) sur lequel est fixé de manière amovible de préférence, un carter (11). Ce carter (11) comporte deux arbres d'entrée (12, 13). Sur la figure 1, on voit que l'arbre de transmission (14) à joints de Cardan est branché sur l'arbre d'entrée (13), tandis que la fourche d'extrémité (22) de cet arbre de transmission sera reliée à l'arbre de prise de force du tracteur (non représenté).

A la sortie du carter (11), un deuxième arbre à joints de Cardan (16) assure la continuité de la transmission du mouvement jusqu'à un carter de renvoi (17) qui assure l'entraînement des disques (8) de la barre de coupe (5), ainsi que du mécanisme de conditionnement (non représenté), les disques (8) et le mécanisme de conditionnement tournant respectivement à des vitesses avoisinant 3000 et 1000 tr/min.

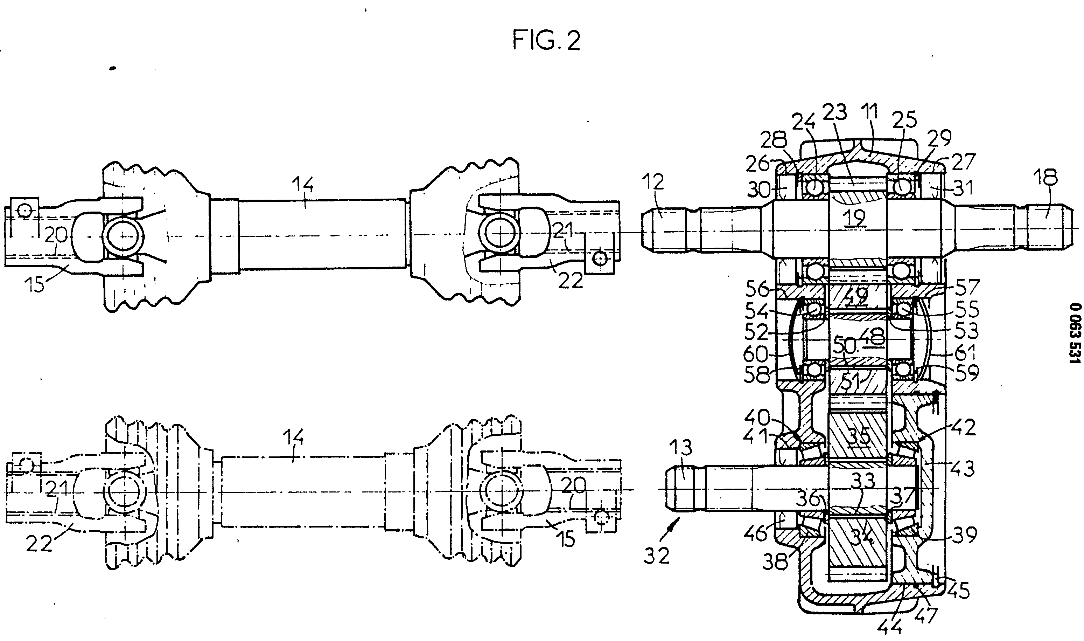

De ce fait, comme visible sur la figure 2, c'est l'arbre d'entrée (12) du carter (11) prévu pour être entraîné par une prise de force tournant à 1000 tr/min, qui forme avec l'arbre de sortie (18) un seul et même arbre (19).

Ainsi, il suffira de loger dans le carter de renvoi (17) une transmission de rapport environ égal à 1 pour le mécanisme de conditionnement et à 3 pour les disques (8).

Il est bien évident que pour une machine agricole tournant à une vitesse beaucoup plus lente, on peut imaginer un carter (11) dont c'est l'arbre d'entrée (13) prévu pour être entraîné par une prise de force tournant à 540 tr/min qui forme avec l'arbre de sortie une seule pièce.

D'autre part, il est possible de réaliser un carter qui possède deux arbres de sortie de telle manière que l'arbre d'entrée (12) prévu pour être entraîné à 1000 tr/min forme une seule pièce avec le premier arbre de sortie et l'arbre d'entrée (13) prévu pour être entraîné à 540 tr/min, une seule pièce avec le deuxième arbre de sortie.

Un tel carter est universel dans la mesure où, lorsqu'il est monté sur une machine agricole dont les outils tournent très vite, le deuxième arbre à joints de Cardan (16) (figure 1) est branché sur le premier arbre de sortie et lorsqu'il est monté sur une machine agricole dont les outils tournent lentement, ledit arbre (16) est branché sur le deuxième arbre de sortie. Ainsi, la multiplication de la vitesse de rotation dans le premier cas et la démultiplication dans le deuxième cas peuvent être réalisées de manière progressive.

La figure 2 représente une vue de l'arbre de transmission (14) à joints de Cardan et du carter (11) avec ses deux arbres d'entrée (12, 13) et son arbre de sortie (18). Les arbres d'entrée (12, 13) possèdent respectivement 6 et 21 cannelures. Dans la fourche (15) de l'arbre de transmission (14) est aménagé un alésage (20) qui comporte 21 cannelures tandis que l'alésage (21) de la fourche (22) en comporte 6.

Ainsi lorsque la machine agricole équipée du carter (11) et de l'arbre de transmission (14) est attelée à un tracteur dont la prise de force tourne à 1000 tr/min et comporte 21 cannelures, c'est la fourche (15) de l'arbre de transmission (14) qui est branchée sur ladite prise de force et la fourche (22) sur l'arbre d'entrée (12) prévu pour être entraîné à 1000 tr/min (agencement représenté en traits forts).

Lorsque la même machine est attelée à un tracteur dont la prise de force tourne à 540 tr/min et comporte 6 cannelures, il suffit de retourner l'arbre de transmission (14) de telle manière que la fourche (22) est branchée sur ladite prise de force et la fourche (15) sur l'arbre d'entrée (13) prévu pour être entraîné à 540 tr/min (agencement représenté en traits discontinus).

Comme dit plus haut, sur la figure 2, on voit que l'arbre d'entrée (12) qui est prévu pour être entraîné par une prise de force tournant à 1000 tr/min et l'arbre de sortie (18) forment un seul et même arbre (19) qui comporte sensiblement dans sa partie centrale, une denture cylindrique (23) de telle manière que l'ensemble forme un pignon arbré.

L'arbre d'entrée (12) comporte avantageusement 6 cannelures de même que l'arbre de sortie (18). Il est bien évident que l'arbre de sortie (18) n'a pas besoin d'avoir nécessairement la même forme et le même nombre de cannelures que l'arbre d'entrée (12).

De part et d'autre de la denture cylindrique (23) s'étendent deux roulements à billes (24, 25) qui guident en rotation l'arbre (19) formé par l'arbre d'entrée (12), l'arbre de sortie (18) et la denture cylindrique (23), dans les alésages (26, 27) du carter (11). L'arbre (19) est lié en translation dans les alésages (26, 27) grâce aux deux circlips (28, 29), les deux joints à lèvres (30, 31) assurant l'étanchéité de manière à ce qu'il n'y ait pas de fuite de l'huile contenue dans le carter (11). L'arbre d'entrée (13) qui est prévu pour être entraîné par une prise de force tournant à 540 tr/min, comporte à son extrémité (32) 21 cannelures. Sensiblement près de l'autre extrémité, ledit arbre d'entrée (13) comporte une dentelure extérieure (33) qui collabore avec la dentelure intérieure (34) de la roue dentée (35) pour assurer la transmission du mouvement de rotation. De part et d'autre de la roue dentée (35) s'étendent deux rondelles (36, 37) contre lesquelles s'appuient les bagues intérieures des roulements (38, 39). Les bagues extérieures des roulements (38, 39) s'appuient respectivement contre l'épaulement (40) aménagé dans l'alésage (41) du carter (11) et contre l'épaulement (42) aménagé dans la boîte à roulement (43). Ainsi, lorsque la boîte à roulement (43) est logée dans l'alésage (44) prévu dans le carter (11) et liée en translation dans cet alésage à l'aide du circlip (45), l'arbre d'entrée (13) est parfaitement lié en translation dans le carter (11). L'emploi de la boîte à roulement (43) est nécessaire afin que le diamètre de l'alésage (44) puisse être réalisé suffisamment grand pour permettre le montage de la roue dentée (35) à l'intérieur du carter (11). L'étanchéité est réalisée grâce à l'emploi du joint à lèvres (46) et du joint torique (47). Le rapport entre la vitesse de rotation de la denture cylindrique (23) et la vitesse de rotation de la roue dentée (35) est avantageusement sensiblement égal à 2.

Ainsi, lorsque la machine équipée du carter (11) est attelée à un tracteur dont la prise de force tourne à 1000 tr/min, l'arbre de transmission est branché sur l'arbre d'entrée (12) qui forme avec l'arbre de sortie (18) une seule pièce. De ce fait la vitesse de rotation de l'arbre de sortie (18) est égale à celle de l'arbre d'entrée (12), soit 1000 tr/min. Lorsque la même machine est attelée à un tracteur dont la prise de force tourne à 540 tr/min, l'arbre de transmission (14) est branché sur l'arbre d'entrée (13) et du fait que le rapport de transmission est sensiblement égal à 2, l'arbre de sortie (18) tourne là encore à environ 1000 tr/min.

Afin que le sens de rotation de l'arbre de sortie (18) soit identique lorsque l'arbre de transmission (14) est branché soit sur l'arbre d'entrée (12), soit sur l'arbre d'entrée (13), un arbre intermédiaire (48) sur lequel est liée en rotation une roue dentée (49) qui transmet le mouvement de la roue dentée (35) à la denture cylindrique (23), s'étend entre les arbres d'entrée (12, 13). La liaison en rotation de la roue dentée (49) avec l'arbre intermédiaire (48) se fait grâce à la collaboration de la dentelure extérieure (50) de l'arbre intermédiaire (48) et de la dentelure intérieure (51) de la roue dentée (49). De part et d'autre de la roue dentée (49) sont aménagées des rondelles (52, 53) contre lesquelles s'appuient les bagues intérieures des roulements (54, 55). L'arbre intermédiaire (48) est lié en translation dans les alésages (56, 57) du carter (11) à l'aide des deux circlips (58, 59). Les bouchons (60, 61) assurent l'étanchéité du carter (11).

Il est bien évident que pour des machines agricoles dont le sens de rotation des outils est indifférent, l'arbre intermédiaire (48) peut être supprimé de telle manière que la roue dentée (35) engrène directement avec la denture cylindrique (23).

Il est également envisageable de faire un carter (11) qui ne possède pas d'arbre de sortie (18) mais dont soit la denture cylindrique (23), soit la roue dentée (35), soit une troisième roue engrène directement avec une roue dentée faisant partie de la transmission interne de la machine.

Il est par ailleurs également possible que l'arbre intermédiaire (48) forme avec un arbre de sortie, une seule et même pièce.

D'autre part, comme dit précédemment, il existe des machines agricoles qui demandent à être entraînées par des tracteurs de haute puissance dont le régime de rotation des prises de force est de 1000 tr/min et dont les formes des arbres desdites prises de force sont

— arbre cannelé de diamètre 45 millimètres ($1^3/_4$ de pouce) à 6 cannelures droites, ou
— arbre cannelé de diamètre 45 millimètres ($1^3/_4$ de pouce) à 20 cannelures en développante.

Dans ce cas, un carter selon l'invention aura un des arbres d'entrée qui possède 6 cannelures et l'autre 20 cannelures, le rapport de transmission entre ces deux arbres étant sensiblement égal à 1. Une machine agricole équipée de ce carter en combinaison avec un arbre de transmission à joints de Cardan dont les fourches d'extrémité possèdant respectivement en alésage de 6 et de 20 cannelures, peut être attelée auxdits tracteurs sans accessoires d'adaptation.

Il est bien évident qu'on ne sortira pas du cadre de la présente invention en apportant aux exemples de réalisation décrits ci-dessus divers perfectionnements, modifications ou additions.

On pourra en effet également trouver sur la même carter un arbre cannelé de diamètre 45 millimètres ($1^3/_4$ de pouce) avec 6 cannelures droites ou 20 cannelures en développante et un arbre cannelé de diamètre 35 millimètres ($1^3/_8$ de pouce) avec 6 cannelures droites ou 21 cannelures en développante.

## Revendications

1. Machine agricole dont les outils sont entraînés à partir de la prise de force d'un tracteur, par l'intermédiaire d'un dispositif de transmission de mouvement, caractérisée par le fait que ledit dispositif de transmission de mouvement se compose d'une manière connue en soi d'un carter (11) qui comporte deux arbres d'entrée (12, 13) reliés aux outils par des moyens d'entraînement et entraînés par la prise de force du tracteur au moyen d'un arbre de transmission à joints de Cardan (14), que les profils des cannelures des arbres d'entrée (12, 13) sont différents, et que l'une des fourches d'extrémité (22) de l'arbre de transmission à joints de Cardan (14) possède un alésage (21) dont les cannelures sont identiques à celles du premier arbre d'entrée (12) et dont l'autre fourche d'extrémité (15) possède un alésage (20) dont les cannelures sont identiques à celles du deuxième arbre d'entrée (13).

2. Machine agricole selon la revendication 1, caractérisée par le fait que l'arbre d'entrée (12) est prévu pour être entraîné à 1000 tr/min, a un diamètre de 35 millimètres ($1^3/_8$ de pouce) et comporte 6 cannelures, et que l'arbre d'entrée (13) est prévu pour être entraîné à 540 tr/min, a un diamètre de 35 millimètres ($1^3/_8$ de pouce) et comporte 21 cannelures.

3. Machine agricole selon les revendications 1 ou 2, caractérisée par le fait que les deux arbres d'entrée (12, 13) sont interconnectés par des organes de transmission (35, 49, 23) dont le rapport de transmission est environ égal à 2.

4. Machine agricole selon la revendication 1, caractérisée par le fait que les arbres d'entrée (12, 13) ont un diamètre de 45 millimètres ($1^3/_4$ de pouce) et comportent l'un 6 cannelures et l'autre 20 cannelures.

5. Machine agricole selon les revendications 1 ou 4, caractérisée par le fait que les deux arbres d'entrée (12, 13) sont interconnectés par des organes de transmission dont le rapport de transmission est environ égal à 1.

6. Machine agricole selon l'une quelconque des revendications précédentes, caractérisée par le fait que ledit carter (11) comporte au moins un arbre de sortie (18).

7. Machine agricole selon la revendication 6, caractérisée par le fait qu'au moins un arbre de sortie (18) et un arbre d'entrée (12 ou 13) forment un seul et même arbre (19).

8. Machine agricole selon l'une quelconque des revendications précédentes, caractérisée par le fait qu'entre les arbres d'entrée (12 et 13) s'étend un arbre intermédiaire (48).

## Patentansprüche

1. Landmaschine, deren Werkzeuge von der Zapfwelle eines Schleppers, mittels einer Antriebsvorrichtung, angetrieben sind, dadurch gekennzeichnet, daß die Antriebsvorrichtung in an sich bekannter Weise aus einem Getriebe (11) besteht, welches zwei Eingangswellen (12, 13) besitzt, die mit den Werkzeugen mittels Antriebsmittel verbunden sind und von der Zapfwelle des Schleppers durch eine Gelenkwelle (14) angetrieben sind, daß die Zahnwellenprofile der Eingangswellen (12, 13) verschieden sind, und daß eine der Endgelenkgabel (22) der Gelenkwelle (14) eine Bohrung (21) aufweist, deren Verzahnung der der ersten Eingangswelle (12) entspricht und die andere Endgelenkgabel (15) eine Bohrung (20) aufweist, deren Verzahnung der der zweiten Eingangswelle (13) entspricht.

2. Landmaschine nach Anspruch 1, dadurch gekennzeichnet, daß die Eingangswelle (12) für eine Antriebsgeschwindigkeit von 1000 U/Min. vorgesehen ist und einen Durchmesser von 35 Millimeter ($1^3/_8$ Inch) mit einer 6teiligen Verzahnung hat, und daß die Eingangswelle (13) für eine Antriebsgeschwindigkeit von 540 U/Min. vorgesehen ist und einen Durchmesser von 35 Millimeter ($1^3/_8$ Inch) mit einer 21teiligen Verzahnung hat.

3. Landmaschine nach Anspruch 1 oder 2, dadurch gekennzeichnet, daß die zwei Eingangswellen (12, 13) mit Kupplungsorganen (35, 49, 23) verbunden sind, die ein Übertragungsverhältnis von etwa 2 haben.

4. Landmaschine nach Anspruch 1, dadurch gekennzeichnet, daß die Eingangswellen (12, 13) einen Durchmesser von 45 Millimeter ($1^3/_4$ Inch) haben, die erste mit einer 6teiligen Verzahnung und die zweite mit einer 20teiligen Verzahnung.

5. Landmaschine nach Anspruch 1 oder 4, dadurch gekennzeichnet, daß die zwei Eingangswellen (12, 13) mit Kupplungsorganen verbunden sind, die ein Übertragungsverhältnis von etwa 1 haben.

6. Landmaschine nach einem der vorhergehenden Ansprüche, dadurch gekennzeichnet, daß das Getriebe (11) mindestens eine Ausgangswelle (18) besitzt.

7. Landmaschine nach Anspruch 6, dadurch gekennzeichnet, daß mindestens eine Ausgangswelle (18) und eine Eingangswelle (12 oder 13) eine einzige Welle (19) bilden.

8. Landmaschine nach einem der vorhergehenden Ansprüche, dadurch gekennzeichnet, daß zwischen den Eingangswellen (12 oder 13) eine Zwischenwelle (48) angeordnet ist.

## Claims

1. Agricultural machine whose tools are driven by the power take off shaft of a tractor, by means of a transmission device, characterized in that said transmission device comprises in a known manner a housing (11) provided with two input shafts (12, 13) connected to the tools by driving means and which are driven by the power take off shaft of the tractor by means of a transmission shaft with universal joints (14), that the shape of the splines of the input shafts (12, 13) are different, and that one of the yokes (22) of the transmission shaft (14) is provided with a bore (21) whose splines are identical with those of the first input shaft (12) and that the other yoke (15) is provided with a bore (20) whose splines are identical with those of the second input shaft (13).

2. Agricultural machine according to claim 1, characterized in that the input shaft (12) is foreseen to be driven at 1000 RPM, has a diameter of 35 millimeters ($1^3/_8$ Inch) and is provided with 6 splines, and that the input shaft (13) is foreseen to be driven at 540 RPM, has a diameter of 35 millimeters ($1^3/_8$ Inch) and is provided with 21 splines.

3. Agricultural machine according to claim 1 or 2, characterized in that the two input shafts (12, 13) are interconnected by transmission means (35, 49, 23) whose transmission-ratio is substantially 2.

4. Agricultural machine according to claim 1, characterized in that the input shafts (12, 13) have a diameter of 45 millimeters ($1^3/_4$ Inch) and are provided one with 6 splines and the other with 20 splines.

5. Agricultural machine according to claim 1 or 4, characterized in that the two input shafts (12, 13) are interconnected by transmission means whose transmission-ratio is substantially 1.

6. Agricultural machine according to one of the preceding claims, characterized in that said housing (11) comprises at least one output shaft (18).

7. Agricultural machine according to claim 6, characterized in that at least one output shaft (18) and one input shaft (12 or 13) constitute a single shaft (19).

8. Agricultural machine according to one of the preceding claims, characterized in that an intermediate shaft (48) is provided between the input shafts (12 and 13).

# FIG.1

0 063 531

FIG. 2